Europäisches Patentamt

European Patent Office

Office européen des brevets

(11) Publication number: **0 134 382**
**B1**

## (12) EUROPEAN PATENT SPECIFICATION

(45) Date of publication of patent specification: **02.03.88**

(51) Int. Cl.⁴: **F 03 B 17/02**

(21) Application number: **83830174.5**

(22) Date of filing: **07.09.83**

(54) **Hydraulic machine.**

(43) Date of publication of application:
**20.03.85 Bulletin 85/12**

(45) Publication of the grant of the patent:
**02.03.88 Bulletin 88/09**

(84) Designated Contracting States:
**AT BE CH DE FR GB IT LI LU NL SE**

(56) References cited:
**WO-A-81/02329**
**CH-A- 105 772**
**DE-A-2 822 688**
**FR-A-2 407 367**
**GB-A- 238 501**
**GB-A-1 484 721**
**US-A-4 189 918**

(73) Proprietor: **Sbrizzai, Marino**
**Via Parenzo 95**
**I-10151 Torino (IT)**

(72) Inventor: **Sbrizzai, Marino**
**Via Parenzo 95**
**I-10151 Torino (IT)**

(74) Representative: **Notaro, Giancarlo et al**
**c/o Jacobacci-Casetta & Perani S.p.A. Via Alfieri,**
**17**
**I-10121 Torino (IT)**

Courier Press, Leamington Spa, England.

## Description

The subject of the present invention is a hydraulic machine, comprising:

a reservoir intended to be filled with a fluid,

a rotor freely rotatably supported about a horizontal axis within the reservoir, the rotor being so shaped that the centre of buoyancy thrust to which the rotor is subject when it is completely immersed in the fluid is spaced apart from the axis of rotation of the rotor.

Devices of the like are commonly used for extracting energy from waves. For instance, US—A—4,189,918 discloses a floating member which is allowed to move in response to the waves so as to bob up and down with the waves.

Similarly, WO—A—81/02329 discloses a device able to float on the free surface of the water. This device comprises an elongated body which is provided along the periphery with longitudinal vanes which afford a greater displacing capacity at one side of the longitudinal axis of the body than at the other side so that the body is caused to rotate by wave movements when it is anchored in the water with the longitudinal axis substantially in the surface of the water.

Both these devices require waves either natural or artificial in order to operate correctly. In the first case the device will operate only if and when waves are provided by the wind or currents or the such like. On the other hand a wave making device is required in order to propagate waves in a tank. And such device would absorb much energy.

It is the object of the present invention to provide a hydraulic machine which overcomes the above mentioned inconveniences, and in which the Archimedean force is exploited in order to obtain a continuous rotation of a shaft, either through a linear input of a mechanical actuation or by changing the quantity of the liquid in the reservoir through an aperture.

According to the present invention a device of the type described above is provided, characterised in that it further comprises:

means for varying cyclically the distance between the axis of rotation of the rotor and the free surface of the fluid within the reservoir, when the quantity of the fluid is maintained constant, or for causing a cyclic variation in the volume of the fluid in the reservoir, when the axis of the rotor is fixed,

and in that the rotor has a cylindrical body with a transverse section having an outline including a part of a circle with its centre located on the axis of rotation of the rotor, and a plurality of straight segments.

This rotor is intended to be connected through a mechanical transmission (for example, a reduction gear) to a load device such as an electric generator.

The machine according to the present invention may also be used, to advantage, in the form of a model, as a teaching instrument for demonstrating the effects of Archimedean force.

In a preferred embodiment the axis of the rotor is fixed and the reservoir is provided with an aperture in its bottom for the introduction and discharge of the fluid.

Further characteristics and advantages of the machine according to the present invention will emerge from the following description, with reference to the appended drawings, provided purely by way of non-limiting example, in which:

Figure 1 is a perspective view of a model of the machine according to the present invention which has been used as experimental apparatus,

Figure 2 is a side view of the machine of Figure 1, and

Figures 3 to 11 are schematic views illustrating the various stages of operation of the machine according to the present invention.

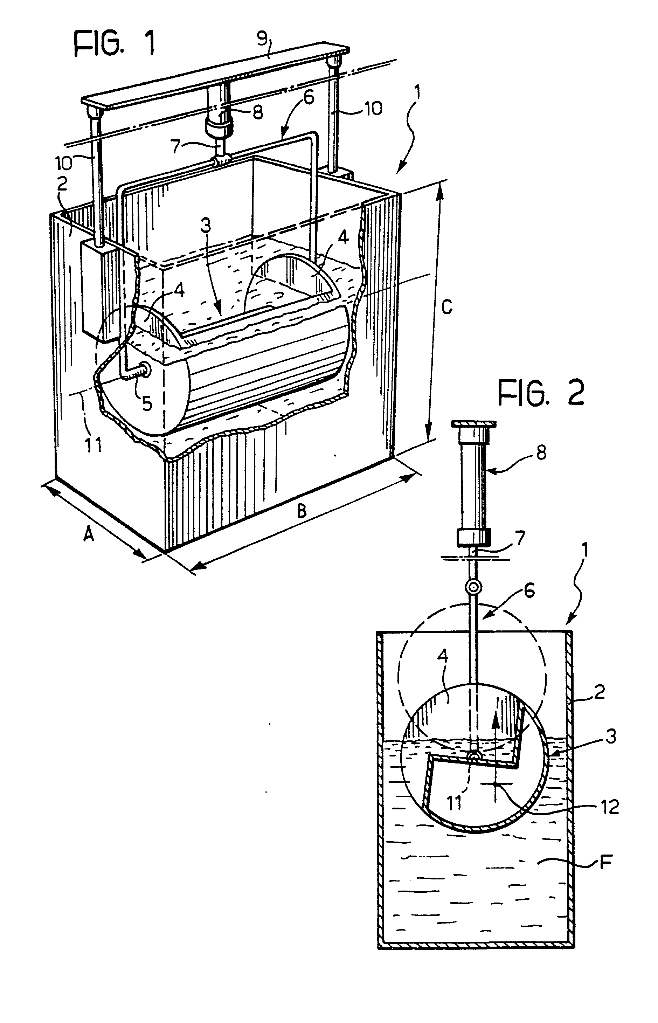

In Figures 1, 2 reference numeral 1 generally indicates a hydraulic machine comprising a reservoir 2 intended to be filled with a fluid F (see Figure 2).

In the practical embodiment made by the Applicant, the reservoir 2 is of parallelepiped shape with a width A of 14.5 cm, a length B of 24 cm and a height C of 24.5 cm.

However, as will emerge from the description which follows, the shape and dimensions of the reservoir are irrelevant to the characteristics of operation of the machine according to the invention.

Within the reservoir 2 there is disposed a rotor 3 constituted by a hollow cylindrical body having two circular end walls 4. The rotor 3 is freely rotatably mounted on a shaft 5 forming part of a frame 6 which is connected to the rod 7 of an actuator cylinder 8. The body of the actuator cylinder 8 is fixed to a beam 9 the ends of which are supported by two pillars 10 the lower ends of which are fixed to the walls of the reservoir 2.

As illustrated in Figure 2, the rotor 3 is constituted by a hollow cylindrical body the transverse section of which corresponds to a part of a circle having its centre located on the axis of rotation of the rotor, which is indicated 11. The diameter of this circle corresponds to that of the circular end plates 4 of the rotor 3.

In an alternative construction, the rotational support of the rotor 3 is achieved by means of two lugs of the frame 6 which support solely the circular end plates 4, instead of by means of the shaft traversing the rotor axially over its entire length.

With reference to Figure 2, the transverse section of the rotor body is so shaped that, when the rotor is immersed in the fluid F, the centre of the buoyancy thrust to which the rotor is subjected by the fluid is not located on the axis of rotation 11.

In the case, for example, in which the rotor 3 is completely submerged in the liquid F in the position illustrated in Figure 2, the centre of thrust produced by the liquid on the rotor would be located at the point indicated 12. Clearly the position of the rotor illustrated in Figure 2 would not then be a position of equilibrium. The thrust exerted by the fluid on the rotor corresponds in fact to the application of a torque on the rotor itself which causes it to rotate (in an anticlockwise sense with reference to Figure 2). If the distance between the free surface of the liquid F contained in the reservoir 2 and the axis of rotation 11 remains constant the rotation continues until a position of equilibrium is reached.

Experiments carried out by the Applicant with apparatus of the type illustrated in Figures 1, 2, in which the rotor 3 had a diameter of 22 cm, an axial length of 7 cm and a mass of 600 g have shown that the rotation effected by the rotor 3 from the position illustrated in Figure 2 until it reaches the condition of equilibrium is about equal to 180°.

If one wishes to prevent the rotor from stopping in the equilibrium condition and to obtain continuous rotation of the rotor it suffices, during the rotation imparted by the fluid to the rotor, to drive the actuator cylinder 8 so as to raise the axis of rotation 11. This allows the rotor 3 to pass the said equilibrium condition due to inertia, in that it emerges almost totally from the fluid. Immediately the rotor 3 has returned so as to be close to the position illustrated in Figure 2, the actuator cylinder 8 must be driven so as to lower the axis of rotation 11 to the condition illustrated in Figure 2, so as to make use of the thrust of the liquid F to cause a continuation of the rotation of the rotor. In Figure 2 the aforementioned raised position of the rotor is shown in broken outline.

Experiments carried out by the Applicant have shown that if one starts from the condition illustrated in Figure 2, with the axis of rotation 11 disposed about 2 cm below the free surface of the liquid, and if one raises the axis of rotation 11 by 6 cm after the rotor has effected an angular rotation through about 90° from the position illustrated in Figure 2, and finally one lowers the axis of rotation 11 into the initial position immediately before the return of the rotor 3 to the position illustrated in Figure 2, one achieves continuous rotation of the rotor 3 in the anticlockwise sense (with reference to Figure 2) at an average rate of about 1 revolution per second.

The said experiments have also shown that the velocity of rotation is greater the greater the vertical distance through which the axis of rotation 11 is moved and the greater the angle of rotation of the rotor from the position illustrated in Figure 2 at which the raising of the axis of rotation 11 is effected. Experiments have also shown that the volume and the shape of the receptacle do not matter.

The apparatus illustrated in Figures 1, 2 could be used, to advantage, as a teaching instrument for demonstrating the effects of Archimedean force.

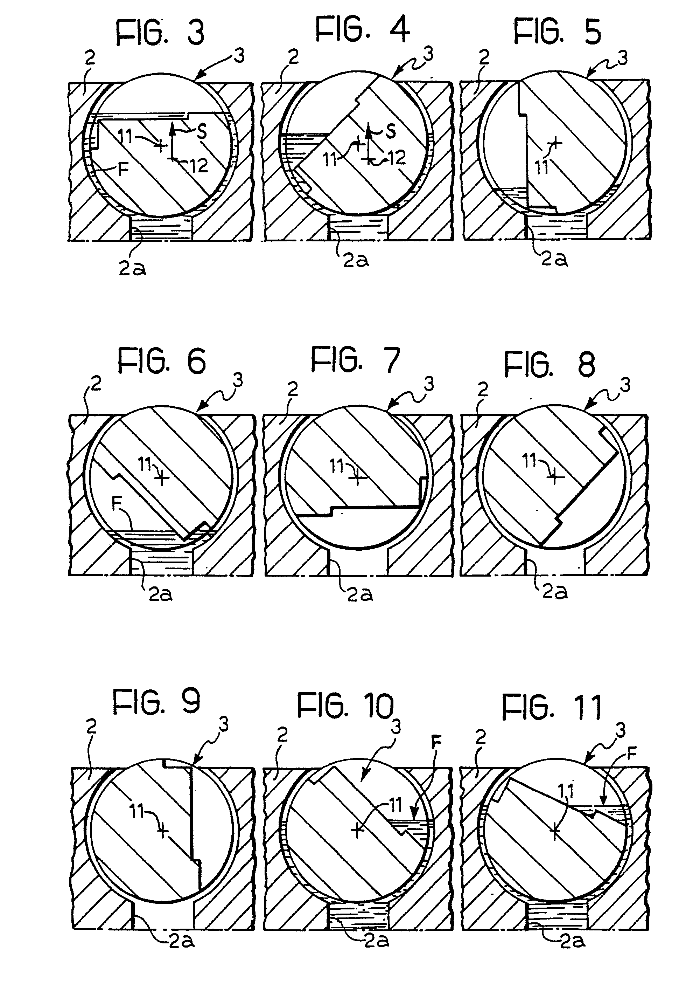

Figures 3 to 11 illustrate schematically the various stages of operation of a preferred embodiment of the machine according to the invention which can be used industrially.

In the machine illustrated in these Figures the axis of rotation 11 of the rotor is fixed and the variation in the distance between the axis of rotation and the free surface of the liquid is achieved by varying the quantity of liquid within the reservoir. To this end the reservoir 2 has an aperture 2a in the bottom for the delivery and discharge of the liquid F.

A further characteristic of the machine illustrated in Figures 3 to 11 lies in the fact that the internal surface of the reservoir is parallel to and adjacent the surface of the rotor 3. By virtue of this characteristic it is possible to achieve relatively high variations in the level of the liquid in the reservoir while displacing relatively small quantities of liquid.

Figures 3 to 11 illustrate the rotor 3 in its various angular positions and the corresponding positions of the centre 12 of the buoyancy thrust applied by the liquid to the rotor.

The transverse section of the rotor of the machine illustrated in Figures 3 to 11 is different from that illustrated in Figures 1, 2. This section is also so shaped that, in the condition illustrated for example in Figure 3, the centre of thrust 12 is not located on the axis of rotation 11. The thrust exerted by the liquid on the rotor, indicated by the vector S in the drawings, thus causes the rotor to rotate in an anticlockwise sense (with reference to the drawings). Figures 4 to 11 illustrate the various positions of the rotor corresponding to a rotation of the rotor itself from the position of Figure 3 through respective angles of: 45°, 90°, 135°, 180°, 225°, 270°, 315°, 330°.

At an angle of rotation of about 150° (position intermediate those illustrated in Figures 6, 7) liquid F is made to flow out of the reservoir so as to leave the rotor out of the liquid. The introduction of liquid into the reservoir is effected at an angle of rotation of about 300° (position intermediate those illustrated in Figures 9, 10).

In one example of application the shaft of rotation of the rotor is connected through a reduction gear to an electrical generator.

The utilisation of a hydraulic press (essentially two intercommunicating vessels of different cross section) to control the quantity of liquid present within the reservoir allows relatively high quantites of liquid to be moved with relatively low forces.

**Claims**

1. Hydraulic machine, comprising:
   a reservoir (2) intended to be filled with a fluid (F), and
   a rotor (3) freely rotatably supported about a horizontal axis (11) within the reservoir (2), the rotor (3) being so shaped that the centre (12) of buoyancy thrust to which the rotor (3) is subject when it is completely immersed in the fluid (F) is spaced apart from the axis (11) of rotation of the rotor, characterized in that it further comprises:
   means for varying cyclically the distance between the axis of rotation (11) of the rotor (3) and the free surface of the fluid (F) within the reservoir, when the quantity of the fluid is maintained constant, or for causing a cyclic variation in the volume of the fluid within the reservoir, when the axis (11) of the rotor (3) is fixed,

and in that the rotor has a cylindrical body with a transverse section having an outline including a part of a circle with its centre located on the axis of rotation (11) of the rotor (3), and a plurality of straight segments.

2. Hydraulic machine according to Claim 1, characterised in that the axis (11) of the rotor (3) is fixed, and the reservoir has an aperture (2a) in the bottom for the delivery and discharge of the fluid.

3. Hydraulic machine according to Claim 1, characterised in that the said means are arranged to cause a cyclic variation in the height of the axis of rotation (11) of the rotor (3) relative to the reservoir (2), if the quantity of the fluid in the reservoir is maintained constant.

**Patentansprüche**

1. Hydraulisches Gerät mit:

einem Behälter (2), der mit einer Flüssigkeit (F) gefüllt werden soll, und

einem Rotor (3), der um eine horizontale Achse (11) innerhalb des Behälters (2) frei drehbar gelagert ist, wobei der Rotor (3) so geformt ist, daß der Mittelpunkt (12) der Auftriebskraft, der der Rotor (3) unterworfen ist, wenn er vollständig in die Flüssigkeit (F) eingetaucht ist, von der Drehachse (11) des Rotors beabstandet ist,

dadurch gekennzeichnet, daß das hydraulische Gerät weiters enthält:

eine Einrichtung, um den Abstand zwischen der Drehachse (11) des Rotors (3) und der freien Fläche der Flüssigkeit (F) im Behälter periodisch zu verändern, wenn die Flüssigkeitsmenge konstant gehalten wird, oder eine periodische Änderung des Flüssigkeitsvolumens im Behälter vorzunehmen, wenn die Achse (11) des Rotors (3) festgehalten wird,

und daß der Rotor einen zylindrischen Körper mit einem Querschnitt besitzt, dessen Umriß einen Teil eines Kreises, dessen Mittelpunkt auf der Drehachse (11) des Rotors (3) liegt, sowie eine Vielzahl von geraden Segmenten aufweist.

2. Hydraulisches Gerät gemäß Anspruch 1, dadurch gekennzeichnet, daß die Achse (11) des Rotors (3) feststeht und der Behälter eine Öffnung (2a) im Boden besitzt, um die Flüssigkeit zuzuführen und abzulassen.

3. Hydraulisches Gerät gemäß Anspruch 1, dadurch gekennzeichnet, daß die Einrichtung so angeordnet ist, um eine periodische Änderung in der Höhe der Drehachse (11) des Rotors (3) relativ zum Behälter (2) hervorzurufen, wenn die Flüssigkeitsmenge im Behälter konstant gehalten wird.

**Revendications**

1. Machine hydraulique, comprenant:

un réservoir (2) destiné à être rempli par un fluide (F), et

un rotor (3) supporté à rotation libre autour d'un axe horizontal (11) à l'intérieur du réservoir (2), ce rotor (3) étant configuré de manière que le centre (12) de la poussée ascensionnelle, à laquelle le rotor (3) est soumis lorsqu'il est complètement immergé dans le fluide (F), se trouve à distance de l'axe de rotation (11) du rotor, caractérisée par le fait qu'elle comprend, en outre:

des moyens pour faire varier cycliquement la distance entre l'axe de rotation (11) du rotor (3) et la surface libre du fluide (F) à l'intérieur du réservoir, lorsque la quantité de ce fluide est maintenue constante, ou bien pour provoquer une variation cyclique du volume du fluide à l'intérieur du réservoir lorsque l'axe (11) du rotor (3) est fixe,

et par le fait que le rotor possède un corps cylindrique muni d'une section transversale dont le profil externe matérialise une partie d'un cercle dont le centre se trouve sur l'axe de rotation (11) du rotor (3), ainsi que de multiples segments rectilignes.

2. Machine hydraulique selon la revendication 1, caractérisée par le fait que l'axe (11) du rotor (3) est fixe et le réservoir est percé, dans son fond, d'un orifice (2a) permettant l'admission et la sortie du fluide.

3. Machine hydraulique selon la revendication 1, caractérisée par le fait que lesdits moyens sont agencés pour provoquer une variation cyclique de la hauteur de l'axe de rotation (11) du rotor (3) par rapport au réservoir (2), si la quantité du fluide présente dans le réservoir est maintenue constante.

0 134 382

FIG. 1

FIG. 2

0 134 382

FIG. 3

2   3
11  S
F   12
2a

FIG. 4

2   3
S
11  12
2a

FIG. 5

2   3
11
2a

FIG. 6

2   3
11
F
2a

FIG. 7

2   3
11
2a

FIG. 8

2   3
11
2a

FIG. 9

2   3
11
2a

FIG. 10

2   3   F
11
2a

FIG. 11

2   3   F
11
2a

2